# FASCICULE DE BREVET EUROPEEN

(11) **EP 0 891 267 B1**
(45) Date de publication et mention de la délivrance du brevet: **29.12.1999**
(21) Numéro de dépôt: 97921896.3
(22) Date de dépôt: 25.04.1997
(51) Int. Cl.: B60R 1/10

(54) **DISPOSITIF DE RETROVISION POUR VEHICULE AUTOMOBILE**
RÜCKBLICKEINRICHTUNG FÜR KRAFTFAHRZEUG
MOTOR VEHICLE REAR-VIEW MIRROR DEVICE

(30) Priorité: 26.04.1996 FR 9605519
(43) Date de publication de la demande: 20.01.1999
(73) Titulaire: Rethore, Olivier, 63110 Beaumont (FR); Rethore, Sabine, 13001 Marseille (FR); Rethore, Magali, 34200 Sète (FR); Rethore, Gérard, 34200 Sète (FR)
(72) Inventeur: RETHORE, Gérard, F-34200 Sète (FR)
(74) Mandataire: Hartmann, Jean-Luc
(86) Numéro de dépôt international: FR9700754
(87) Numéro de publication internationale: WO9741004

(56) Documents cités:
- WO-A-92/18353
- DE-A- 2 014 696
- DE-C- 956 379
- DE-U- 8 500 105
- FR-A- 2 240 618
- FR-E- 83 489
- GB-A- 2 142 298
- US-A- 2 281 102
- US-A- 4 722 101
- US-A- 5 559 640
- PATENT ABSTRACTS OF JAPAN vol. 7, no. 183 (M-235), 12 Août 1983 & JP 58 085737 A (OLYMPUS), 23 Mai 1983,

## Description

La présente invention concerne un nouveau dispositif de rétrovision pour véhicule automobile.

Actuellement, les rétroviseurs extérieurs utilisés sur les véhicules automobiles sont des miroirs plans ou légèrement convexes montés à l'extérieur du véhicule, à proximité de l'angle inférieur antérieur des vitres latérales avant. Ils sont chacun montés dans un support caréné qui forme une saillie par rapport à la carrosserie du véhicule. Le conducteur du véhicule regarde son rétroviseur à travers la vitre latérale correspondante.

La grande dimension des rétroviseurs actuels pose des problèmes lors de l'utilisation du véhicule. La saillie formée par chacun de ces rétroviseurs, ou plus précisément leur support, est importante et constitue un frein aérodynamique pour le véhicule.

Les proéminences latérales constituées par les rétroviseurs et leurs supports peuvent également provoquer des heurts, notamment lorsque le véhicule circule en agglomération.

Enfin, pour regarder ses rétroviseurs, un conducteur est obligé de détourner la tête de l'axe de la route. Il doit donc quitter des yeux la chaussée se trouvant devant lui pour regarder ce qui se passe derrière lui.

Le document JP-A-58 085 737 révèle un dispositif permettant de regarder sous une voiture dans laquelle un conducteur est assis sur le siège du conducteur. Ce dispositif est destiné à être utilisé au démarrage de la voiture. Il comporte en combinaison un miroir convexe placé sous la voiture et un système optique télescopique avec un oculaire disposé dans le siège du conducteur.

Le document US-3,394,978 révèle un dispositif de rétrovision pour véhicule. Ce dispositif comporte des surfaces réfléchissantes secondaires sur les côtés gauche et droit d'un véhicule qui renvoient horizontalement les vues vers l'arrière à des surfaces réfléchissantes intermédiaires droite et gauche placées dans le véhicule. Ces surfaces renvoient à leur tour ces vues sur les côtés droit et gauche d'une seule surface réfléchissante primaire placé dans le véhicule dans l'axe de vision vers l'avant du conducteur. La surface primaire, à son tour, renvoie l'image vers les yeux du conducteur du véhicule. En option, un système optique à lentille peut remplacer la surface réfléchissante intermédiaire pour compenser le plus long chemin optique des images réfléchies par les surfaces réfléchissantes placées à droite.

Le document DE-956 379 décrit un dispositif de rétrovision comportant trois miroirs, permettant une réflection en zig-zag de la lumière. Un premier miroir extérieur est convexe. Un second miroir sur lequel se reflète la lumière capturée par le miroir extérieur est concave. Un troisième miroir, placé à proximité immédiate du conducteur ou d'un passager, est un miroir plan.

On décrit dans WO 92/18353 un rétroviseur du type dans lequel une lumière provenant d'une zone derrière l'observateur est dirigée vers l'oeil de l'observateur par un système optique comportant un élément réflecteur dans lequel l'élément réfracteur du système optique comprend une pluralité d'interfaces de réfraction inclinées les unes par rapport aux autres et comprenant des première et deuxième interfaces d'un réfracteur d'objectif qui convergent vers un premier côté du plan médian longitudinal du rétroviseur, et des troisième et quatrième interfaces d'un réfracteur oculaire qui convergent vers un deuxième côté du plan médian longitudinal du rétroviseur, opposé au premier côté. Le réfracteur oculaire est traversé deux fois par la lumière dans sa trajectoire entre l'objet et l'oeil de l'observateur ; les réfracteurs peuvent être conçus sous la forme de prismes Fresnel.

L'invention a alors pour but de fournir un dispositif de rétrovision pour véhicules automobiles, permettant de remédier à ces inconvénients. Ainsi le dispositif selon l'invention forme une saillie moins importante à l'extérieur du véhicule, de manière à améliorer la pénétration dans l'air du véhicule et à diminuer les risques de heurts. De plus, le dispositif selon l'invention doit permettre au conducteur d'un véhicule de moins détourner le regard de la chaussée lorsqu'il regarde ses rétroviseurs, par rapport aux rétroviseurs actuels.

À cet effet, l'invention propose un dispositif de rétrovision pour véhicule automobile comportant un miroir convexe fixe ou orientable, destiné à prendre place sur un flanc d'un véhicule automobile. Pour résoudre le problème énoncé ci-dessus, ce dispositif comporte en outre un système optique convergent comportant une ou plusieurs lentilles, appelé lecteur, placé entre le miroir convexe et l'emplacement prévu dans le véhicule pour accueillir un conducteur, de telle sorte que l'axe du lecteur corresponde sensiblement à l'axe de vision du conducteur.

Ainsi, le système optique convergent permet de grossir l'image donnée par le miroir convexe d'un objet observé. Le miroir convexe peut être plus puissant et d'une taille très sensiblement inférieure à celle du miroir d'un rétroviseur de l'art antérieur. La saillie formée par ce miroir convexe est donc nettement inférieure à celle formée par un rétroviseur usuel. En outre, le miroir convexe du dispositif selon l'invention peut être placé à l'avant du véhicule, de telle sorte que les rayons lumineux renvoyés passent par le pare-brise du véhicule, et le lecteur, avant d'atteindre le conducteur. Le conducteur tourne alors moins la tête pour regarder ce qui se passe derrière lui que lorsqu'il regarde à travers une vitre latérale dans un rétroviseur de l'art antérieur.

Dans une première forme de réalisation, le lecteur est constitué par au moins une lentille convexe et l'image donnée par le miroir convexe se situe entre le lecteur et le plan focal du lecteur. Il peut s'agir ici d'une lentille sphérique ou bien d'une lentille asphérique.

Afin d'éviter certaines aberrations et pour rendre à l'image observée l'aspect de l'objet réel, les lentilles utilisées dans le lecteur peuvent être des lentilles asphériques.

Pour permettre d'adapter parfaitement le dispositif au conducteur, le lecteur est avantageusement monté sur un support permettant de faire varier son inclinaison par rapport à l'axe de vision du conducteur. Ainsi, lorsque le lecteur est placé à l'intérieur de l'habitacle du véhicule, il est inutile de prévoir un dispositif pour pouvoir régler les rétroviseurs comme c'est le cas avec les rétroviseurs usuels, pour lesquels un dispositif permet de les régler sans ouvrir la fenêtre latérale correspondante. En effet, le lecteur se trouve alors à portée de main du conducteur.

Pour obtenir un effet de zoom, c'est à dire pour que le conducteur puisse "rapprocher" ou "éloigner" l'image donnée par le dispositif de rétrovision, le lecteur est monté de préférence sur un support mobile en translation sur l'axe de vision du conducteur.

Pour ramener l'image perçue par le conducteur de l'objet situé derrière le véhicule dans son champ visuel, un prisme, dont la base est sensiblement verticale et positionnée vers le flanc du véhicule portant le miroir convexe, est avantageusement intégré au lecteur. Dans une forme de réalisation de ce lecteur, le prisme est intégré au lecteur par l'utilisation d'au moins une lentille convexe prismatique. Le prisme peut toutefois être intégré au miroir convexe, ou capteur, ou bien encore par exemple se trouver entre le lecteur et le capteur.

Dans toutes ces formes d'exécution, le miroir convexe est de préférence un miroir asphérique afin d'éviter certaines aberrations. Il peut bien entendu également s'agir d'un miroir dont la surface est sphérique, mais une surface asphérique permet de rendre facilement à l'image observée l'aspect de l'image réelle.

Pour assurer une meilleure vision au conducteur d'un véhicule équipé d'un dispositif de rétrovision selon l'invention, ce dernier est monté à l'intérieur d'un boîtier tubulaire, dont une extrémité de petite section est destinée à prendre place sur le flanc d'un véhicule et dont l'autre extrémité, de section plus importante, est destinée à être intégrée au tableau de bord de ce véhicule, le miroir convexe prenant place dans le boîtier du côté de l'extrémité de petite section et le lecteur à l'autre extrémité, et une ouverture étant réalisée dans la paroi du boîtier tubulaire au niveau du miroir convexe pour laisser passer les rayons lumineux devant se réfléchir sur celui-ci.

En montant de cette manière le dispositif selon l'invention sur un véhicule, il est possible d'intégrer facilement le système optique selon l'invention en prévoyant sa mise en place dès la conception du véhicule.

De toute façon, l'invention sera bien comprise à l'aide de la description qui suit, en référence au dessin schématique annexé, représentant à titre d'exemples non limitatifs quelques formes d'exécution d'un dispositif de rétrovision selon l'invention.
Figure 1 est une vue de dessus partielle d'un véhicule automobile équipé d'un dispositif de rétrovision selon l'invention,
Figures 2 à 6 montrent de façon schématique quelques formes de réalisation de l'invention en vue de dessus,
Figure 7 est une vue en perspective d'un véhicule équipé d'un dispositif de rétrovision monté dans un boîtier,
Figure 8 est une vue de dessus du boîtier montré à la figure 7,
Figure 9 est une vue semblable à celle de la figure 1, montrant un dispositif de rétrovision monté dans un boîtier,
Figure 10 est une vue en élévation d'un boîtier montré à la figure 9, et
Figure 11 est une vue de dessus du boîtier de la figure 10.

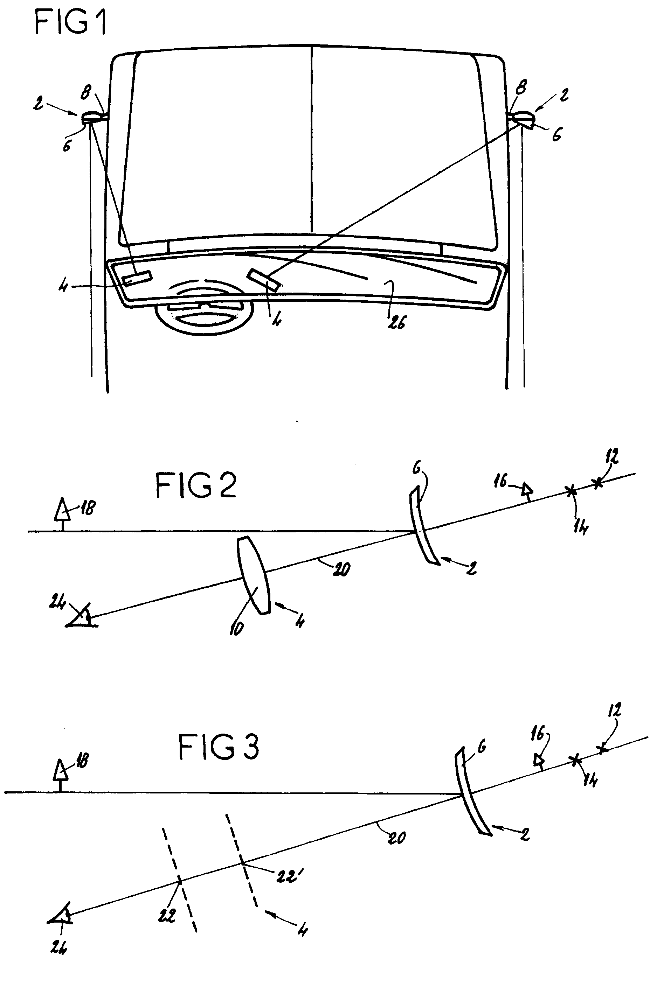

La figure 1 montre un véhicule équipé de deux capteurs 2 et de deux lecteurs 4 afin de permettre à son conducteur de regarder vers l'arrière, du côté gauche et du côté droit du véhicule. Un capteur 2 est placé sur chaque aile avant du véhicule et les deux lecteurs 4 se trouvent sur le tableau de bord du véhicule, l'un légèrement à gauche du conducteur, l'autre légèrement à sa droite.

Chaque capteur 2 est constitué par un miroir convexe 6 monté sur un support 8 permettant de maintenir le miroir convexe 6 légèrement décalé par rapport au flanc du véhicule. Ce miroir convexe 6 est de préférence asphérique afin de supprimer certaines aberrations et de rendre à l'image observée l'aspect de l'image réelle. Ce miroir convexe 6 peut être de taille très nettement intérieure à celle des miroirs utilisés actuellement pour la réalisation de rétroviseurs. À titre d'exemple, un miroir de rétroviseur de l'état de la technique présente une largeur d'environ 180 mm, alors qu'un miroir convexe 6 pour un dispositif selon l'invention de 45 mm permet d'obtenir une aussi bonne vision vers l'arrière que le rétroviseur précité de l'art antérieur.

Le lecteur 4 est placé sur le tableau de bord du véhicule. Il peut être constitué de la façon la plus simple d'une seule lentille convexe 10 (figure 2). De même que pour le miroir convexe 6, il s'agit de préférence d'une lentille asphérique. Bien entendu, une lentille sphérique pourrait également être utilisée.

La lentille convexe 10 est placée entre le miroir convexe 6 et la place destinée à être occupée par le conducteur du véhicule. Elle est telle que, et est positionnée de telle sorte que, une image 16 donnée par le miroir convexe 6 d'un objet 18 se trouve entre la lentille convexe 10 et le plan focal de celle-ci. Sur les figures, le foyer de la lentille convexe 10, ou plus généralement du lecteur 4 porte la référence 12, tandis que le foyer du miroir convexe 6, ou du capteur, porte la référence 14. Le plan focal de la lentille convexe 10 est le plan parallèle à la lentille 10 et contenant le foyer 12. L'image 16 donnée par le miroir convexe 6 se situe toujours entre le miroir convexe 6 et son plan focal. C'est une image virtuelle, plus petite que l'objet 18. La lentille convexe 10 est alors placée de telle sorte que sur son axe optique 20 on retrouve successivement la lentille convexe 10, le miroir convexe 6, le foyer 14 du miroir convexe et le foyer 12 de la lentille. Le foyer 12 de la lentille et le foyer 14 du miroir sont de préférence assez proches l'un de l'autre.

Le conducteur du véhicule souhaitant regarder derrière lui, regarde le miroir convexe 6 à travers la lentille convexe 10. Cette dernière grossit l'image 16 donnée par le capteur 2. En choisissant convenablement les puissances optiques du capteur 2 et du lecteur 4, le conducteur peut obtenir une vision proche de celle qu'offrirait un miroir plan, c'est à dire que le conducteur a une image de taille convenable et peut facilement estimer la distance le séparant de l'objet regardé.

Sur la figure 3, la lentille convexe a été remplacée par un ensemble de lentilles formant un système optique convexe. Les diverses lentilles n'ont pas été représentées, seuls les plans principaux objet 22 et image 22' ont été représentés.

On retrouve là les mêmes caractéristiques que pour la lentille convexe. Ici, il faut que l'image 16 donnée par le capteur se situe entre le plan principal image 22' et le plan focal du lecteur. Sur l'axe du système optique, on retrouve donc successivement le plan principal objet 22, le plan principal image 22', le miroir convexe 6, le foyer 14 du miroir convexe et le foyer 12 du lecteur.

Il est envisageable d'avoir un capteur 2 et un lecteur 4 fixes. Cependant, pour pouvoir adapter le dispositif de rétrovision selon l'invention au conducteur, selon sa taille et la manière dont il souhaite régler sa vision vers l'arrière, il est avantageux de monter le capteur 2 et le lecteur 4 sur un support réglable. Pour effectuer ces réglages, il suffit de pouvoir orienter le lecteur 4 de telle sorte que son axe optique 20 soit adapté à l'axe de vision du conducteur, dont l'oeil est représenté schématiquement et porte la référence 24. On obtient ainsi un réglage du même type que celui qui existe actuellement avec les rétroviseurs classiques. Il est également possible d'orienter le capteur 2.

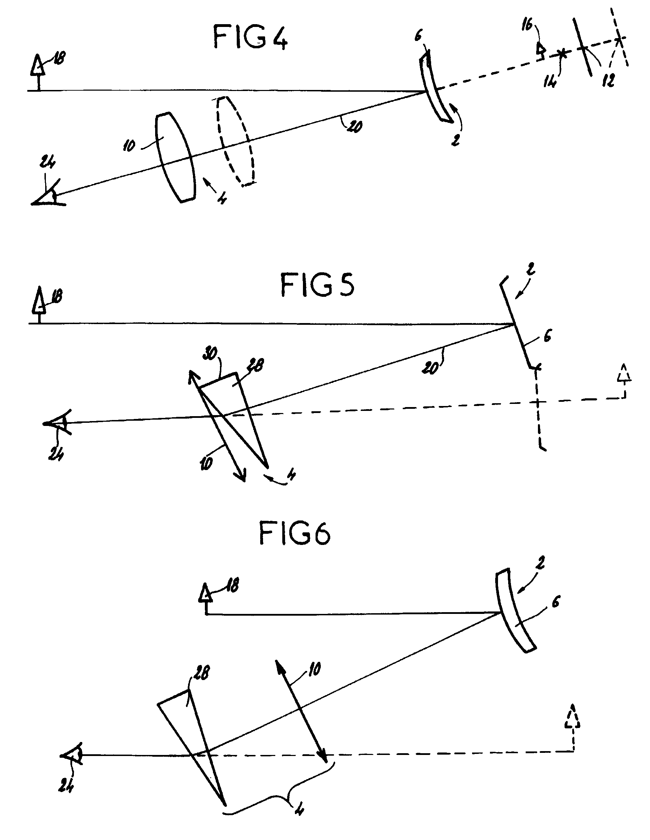

Le dispositif de rétrovision selon l'invention propose un réglage supplémentaire par rapport au réglage décrit précédemment. Ce réglage est illustré sur la figure 4 avec un lecteur tel que représenté à la figure 2. Il permet au conducteur d'avoir un effet zoom. Il suffit pour cela de déplacer le lecteur 4 sur son axe optique 20. Le conducteur perçoit alors une image plus ou moins éloignée de l'objet 18 regardé.

Un autre avantage du dispositif selon l'invention est lié au fait que le rayon lumineux passe par le parebrise pour atteindre le conducteur. En effet, en cas de pluie, avec des rétroviseurs classiques, le conducteur regarde à travers une vitre latérale pour voir son rétroviseur. Il est donc gêné non seulement par les gouttes d'eau se trouvant à la surface du rétroviseur, mais aussi par les gouttes d'eau se trouvant sur la vitre latérale correspondante. Par contre, le pare-brise est une surface balayée par des essuie-glaces. Ainsi les gouttes d'eau sur le pare-brise sont régulièrement éloignées permettant au conducteur une bonne vision. Seules les gouttes d'eau se trouvant éventuellement sur le capteur peuvent donc gêner le conducteur.

On constate que les dispositifs décrits ci-dessus permettent déjà au conducteur de moins tourner la tête pour regarder ce qui se passe derrière lui, par rapport à un rétroviseur classique qui se situe généralement au niveau de l'articulation d'une portière avant du véhicule sur sa carrosserie. Avec un rétroviseur classique, le conducteur regarde à travers une vitre latérale du véhicule pour voir dans son rétroviseur. Avec le dispositif décrit ci-dessus, il regarde en direction de son pare-brise 26. Ceci est donc un progrès sensible.

L'invention propose de rapprocher encore l'angle de vision du conducteur regardant dans ses rétroviseurs de l'axe du véhicule, c'est à dire l'axe de vision normal du conducteur lorsqu'il conduit son véhicule en regardant la chaussée. Ainsi le conducteur peut savoir sans dévier la tête ce qui se passe derrière lui.

La figure 5 montre la forme d'exécution préférée de l'invention. Elle représente un lecteur comprenant une lentille convexe, par exemple la lentille convexe 10 représentée sur les figures 2 et 4, combinée à un prisme 28 de forte puissance. Par rapport à la figure 2, le prisme est simplement placé entre la lentille convexe 10 et le miroir convexe 6. Le prisme 28 permet de changer la direction d'un rayon lumineux, mais il n'agit pas sur les caractéristiques du système optique décrit en référence à la figure 2.

Le prisme 28 présente une base 30 disposée sensiblement verticalement et est située vers l'extérieur du véhicule, du côté où se trouve le miroir convexe 6 correspondant.

L'effet prismatique obtenu évite au conducteur de tourner la tête pour observer ce qui se passe derrière lui. L'image qu'il a des objets se trouvant derrière lui est ramenée dans son champ visuel en position de conduite normale. La figure 5 montre en pointillés position du miroir convexe 6 et de l'image vue par l'oeil 24 du conducteur.

La figure 6 montre une variante de la forme d'exécution décrite ci-dessus en référence à la figure 5. Ici, la lentille convexe 10 est placée entre le prisme 28 et le capteur 2. La position du prisme reste sensiblement inchangée.

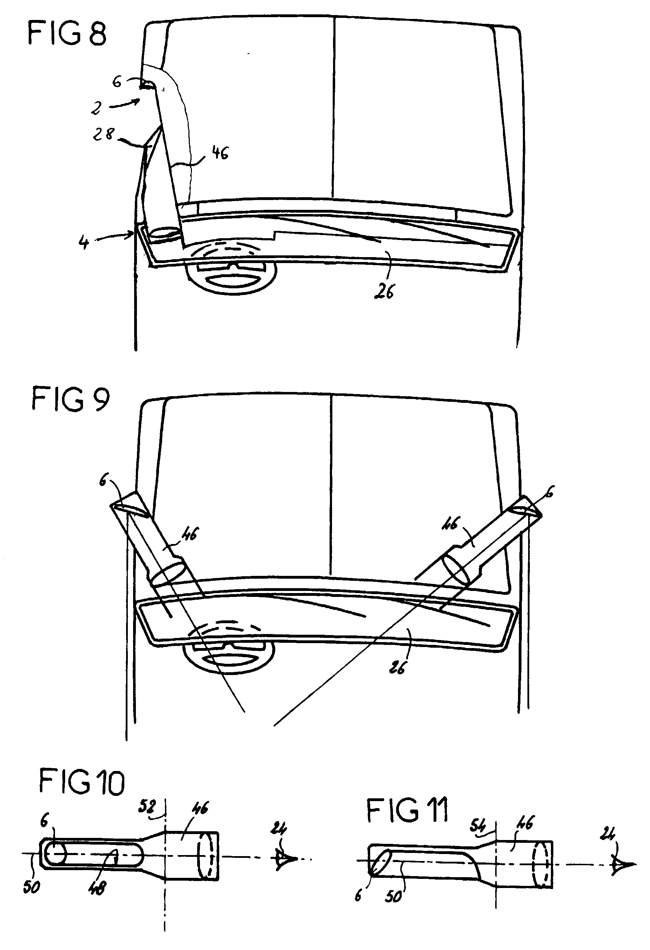

Les figures 10 et 11 montrent en vue de côté et en vue de dessus un boîtier 46 dans lequel prend place un dispositif de rétrovision selon l'invention, tel par exemple un dispositif représenté sur les figures 2 à 5.

Ce boîtier 46 est tubulaire de section transversale circulaire. La section de ce boîtier n'est pas constante. Ce boîtier 46 comporte une première partie de section constante, une seconde partie où la section du tube croît et une troisième partie de section constante. Le capteur 2 est placé près de l'extrémité du boîtier de plus petite section, tandis que le lecteur 4 est placé dans la partie de plus grande section.

Le boîtier 46 comporte une ouverture 48 pour permettre le passage des rayons lumineux. Le boîtier est monté sur un véhicule de telle sorte que le capteur 2 et le lecteur 4 se trouvent dans les positions décrites ci-dessus. Ainsi, comme représenté sur la figure 9, le conducteur d'un véhicule en regardant vers le boîtier 46, verra le lecteur 4 et l'image que lui donne celui-ci d'objets qui se réfléchissent dans le capteur 2 au travers de l'ouverture 48.

Le réglage s'effectue en bougeant l'ensemble du boîtier 46. Celui-ci peut par exemple pivoter autour de trois axes représentés au dessin sur les figures 10 et 11 : un axe longitudinal 50 et deux axes transversaux perpendiculaires l'un à l'autre 52 et 54.

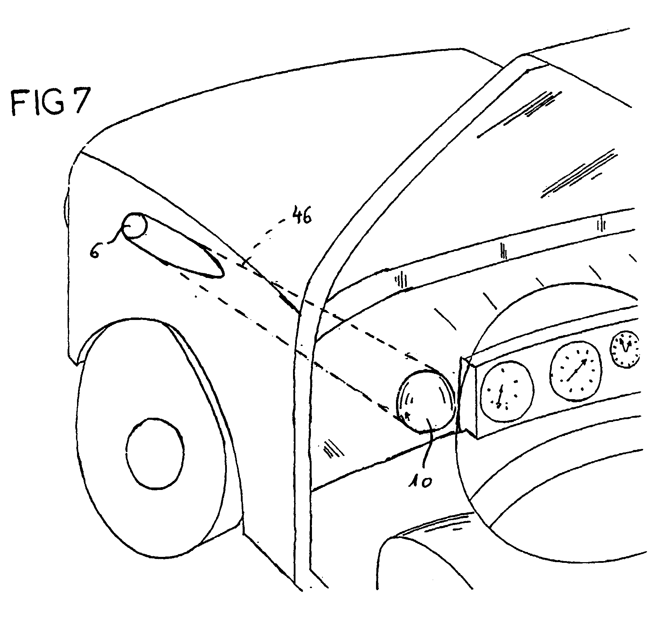

Les figures 7 et 8 montrent un mode de réalisation préféré avec le boîtier 46. Ce mode de réalisation nécessite d'intégrer le dispositif selon l'invention dans la conception du véhicule. À l'intérieur du véhicule, à côté d'instruments placés au tableau de bord, se trouve le lecteur 4. Le boîtier 46 est alors intégré au véhicule. Une de ses extrémités débouche au tableau de bord du véhicule et est équipée du lecteur 4, tandis que l'autre extrémité du boîtier. 46 porte le prisme 28 associé au miroir convexe 6, ou capteur. Un logement est prévu au niveau de l'aile du véhicule pour recevoir le capteur sans qu'il soit nécessaire de prévoir une protubérance sur le véhicule.

Ce mode de réalisation présente plusieurs avantages. Il permet de minimiser la saillie latérale nécessaire pour le dispositif de rétrovision. Il permet aussi de regarder derrière soi sans regarder à travers le pare brise, ni la vitre latérale. Tous les problèmes de pluie ou de reflet parasite ou de saletés qui gênent la vision du conducteur sur La vitre latérale ou le pare brise sont évités.

Comme il va de soi, l'invention ne se limite pas aux formes d'exécution décrites ci-dessus à titre d'exemple non limitatifs ; elle en embrasse au contraire toutes les variantes.

Ainsi, par exemple, au lieu d'utiliser une lentille et un prisme pour ramener l'image observée dans le champ visuel du conducteur en position de conduite normale, il est possible d'utiliser une ou plusieurs lentilles prismatiques. Il est aussi possible d'avoir plusieurs lentilles avec plusieurs prismes.

La position des capteurs et des lecteurs peut être modifiée pour s'adapter aux différents cas de figures. Le lecteur n'est pas forcément dans l'habitacle du véhicule.

La section du boîtier décrit et contenant le dispositif selon l'invention peut être quelconque. Cette forme de la section peut par exemple être choisie pour favoriser la vision d'une zone de la route située à l'arrière du véhicule, tout en répondant bien entendu aux normes exigées en matière de rétroviseurs. L'orientation de ce boîtier peut se faire comme décrit par pivotement de l'ensemble du boîtier, mais il est également possible de ne bouger que le capteur pour réaliser un réglage.

## Revendications

1. Dispositif de rétrovision pour véhicule automobile comportant un miroir convexe, destiné à prendre place sur un flanc d'un véhicule automobile, caractérisé en ce qu'il comporte en outre un système optique convergent (10,28;32,34) comportant une ou plusieurs lentilles, appelé lecteur (4), placé entre le miroir convexe (6) et l'emplacement prévu dans le véhicule pour accueillir un conducteur, de telle sorte que l'axe du lecteur (20) corresponde sensiblement à l'axe de vision du conducteur.

2. Dispositif selon la revendication 1, caractérisé en ce que le lecteur (4) est constitué par au moins une lentille convexe (10) et ce que l'image (16) donnée par le miroir convexe (6) se situe entre le lecteur (4) et le plan focal du lecteur.

3. Dispositif selon la revendication 1 ou 2, caractérisé en ce que les lentilles utilisées dans le lecteur (4) sont des lentilles asphériques.

4. Dispositif selon la revendication 1 ou 2, caractérisé en ce que les lentilles utilisées dans le lecteur (4) sont des lentilles sphériques.

5. Dispositif selon l'une des revendications 1 à 4, caractérisé en ce que le lecteur (4) est monté sur un support permettant de faire varier son inclinaison par rapport à l'axe de vision du conducteur.

6. Dispositif selon l'une des revendications 2 à 5, caractérisé en ce que le lecteur (4) est monté sur un support mobile en translation sur l'axe de vision du conducteur.

7. Dispositif selon l'une des revendications 1 à 6, caractérisé en ce qu'il comporte en outre un prisme (28), dont la base (30) est sensiblement verticale et orientée vers le flanc du véhicule portant le miroir convexe (6), le prisme étant intégré soit au lecteur (4), soit au miroir convexe (6).

8. Dispositif selon l'une des revendications 1 à 6, caractérisé en ce qu'un prisme (28), dont la base (30) est sensiblement verticale et orientée vers le flanc du véhicule portant le miroir convexe (6), est plaçé entre le lecteur (4) et le miroir convexe (6).

9. Dispositif selon la revendication 7, caractérisé en ce que le prisme est intégré au lecteur par l'utilisation d'au moins une lentille convexe prismatique.

10. Dispositif selon l'une des revendications 1 à 9, caractérisé en ce que le miroir convexe (6) est un miroir asphérique.

11. Dispositif selon l'une des revendications 1 à 10, caractérisé en ce qu'il est monté à l'intérieur d'un boîtier (46) tubulaire, dont une extrémité de petite section est destinée à prendre place sur le flanc d'un véhicule et dont l'autre extrémité, de section plus importante, est destinée à être intégrée au tableau de bord de ce véhicule, le miroir convexe (6) prenant place dans le boîtier du côté de l'extrémité de petite section et le lecteur (4) à l'autre extrémité, et une ouverture (48) étant réalisée dans la paroi du boîtier tubulaire (46) au niveau du miroir convexe (6) pour laisser passer les rayons lumineux devant se réfléchir sur celui-ci.

## Claims

1. Rear-view device for a motor vehicle, comprising a convex mirror, which is designed to be positioned on a side of a motor vehicle, characterised in that it additionally comprises a converging optical system (10,28;32,34) which comprises one or a plurality of lenses, known as a reader (4), which is disposed between the convex mirror (6) and the space provided in the vehicle to accommodate a driver, such that the axis of the reader (20) corresponds substantially to the line of sight of the driver.

2. Device according to claim 1, characterised in that the reader (4) consists of at least one convex lens (10), and the image (16) which is provided by the convex mirror (6) is disposed between the reader (4) and the focal plane of the reader.

3. Device according to claim 1 or claim 2, characterised in that the lenses which are used in the reader (4) are aspheric lenses.

4. Device according to claim 1 or claim 2, characterised in that the lenses which are used in the reader (4) are spherical lenses.

5. Device according to any one of claims 1 to 4, characterised in that the reader (4) is mounted on a support, which permits variation of its inclination relative to the line of sight of the driver.

6. Device according to any one of claims 2 to 5, characterised in that the reader (4) is mounted on a support, which is mobile in translation along the line of sight of the driver.

7. Device according to any one of claims 1 to 6, characterised in that it additionally comprises a prism (28), the base (30) of which is substantially vertical, and is oriented towards the side of the vehicle which supports the convex mirror (6), the prism being integrated either in the reader (4), or in the convex mirror (6).

8. Device according to any one of claims 1 to 6, characterised in that a prism (28), the base (30) of which is substantially vertical, and is oriented towards the side of the vehicle which supports the convex mirror (6), is disposed between the reader (4) and the convex mirror (6).

9. Device according to claim 7, characterised in that the prism is integrated in the reader by use of at least one prismatic convex lens.

10. Device according to any one of claims 1 to 9, characterised in that the convex mirror (6) is an aspheric mirror.

11. Device according to any one of claims 1 to 10, characterised in that it is mounted inside a tubular case (46), one end of which, with a small cross section, is designed to be disposed on the side of a vehicle, and the other end of which, with a larger cross section, is designed to be integrated in the dashboard of this vehicle, the convex mirror (6) being disposed in the case at the end which has a small cross section, and the reader (4) being disposed at the other end, and an aperture (48) being provided in the wall of the tubular case (46) at the level of the convex mirror (6), in order to permit passage of the rays of light to be reflected on the latter.

## Patentansprüche

1. Rückblickeinrichtung für Kraftfahrzeug, umfassend einen Konvexspiegel, der dazu bestimmt ist, an einer Seitenfläche eines Kraftfahrzeugs angebracht zu werden,
dadurch gekennzeichnet, daß sie darüber hinaus ein konvergentes optisches System (10, 28; 32, 34) mit einer oder mehreren Linsen, Lesevorrichtung (4) genannt, umfaßt, das zwischen dem Konvexspiegel (6) und dem zur Aufnahme eines Fahrers im Fahrzeug vorgesehenen Platz so angeordnet ist, daß die Achse der Lesevorrichtung (20) im wesentlichen der Sehachse des Fahrers entspricht.

2. Einrichtung nach Anspruch 1, dadurch gekennzeichnet, daß die Lesevorrichtung (4) aus zumindest einer konvexen Linse (10) gebildet wird und daß sich das Bild (16), das von dem Konvexspiegel (6) gegeben wird, zwischen der Lesevorrichtung (4) und der Brennpunktsebene der Lesevorrichtung befindet.

3. Einrichtung nach Anspruch 1 oder 2, dadurch gekennzeichnet, daß die Linsen, die in der Lesevorrichtung (4) verwendet werden, asphärische Linsen sind.

4. Einrichtung nach Anspruch 1 oder 2, dadurch gekennzeichnet, daß die Linsen, die in der Lesevorrichtung (4) verwendet werden, sphärische Linsen sind.

5. Einrichtung nach einem der Ansprüche 1 bis 4, dadurch gekennzeichnet, daß die Lesevorrichtung (4) auf einem Träger montiert ist, der es ermöglicht, ihre Neigung in bezug auf die Sehachse des Fahrers zu variieren.

6. Einrichtung nach einem der Ansprüche 2 bis 5, dadurch gekennzeichnet, daß die Lesevorrichtung (4) auf einem Träger montiert ist, der auf der Sehachse des Fahrers eine Translationsbewegung ausführen kann.

7. Einrichtung nach einem der Ansprüche 1 bis 6, dadurch gekennzeichnet, daß sie darüber hinaus ein Prisma (28) umfaßt, dessen Basis (30) im wesentlichen vertikal und zu der Fahrzeugseitenfläche hin ausgerichtet ist, die den Konvexspiegel (6) trägt, wobei das Prisma entweder in die Lesevorrichtung (4) oder in den Konvexspiegel (6) integriert ist.

8. Einrichtung nach einem der Ansprüche 1 bis 6, dadurch gekennzeichnet, daß ein Prisma (28), dessen Basis (30) im wesentlichen vertikal und zu der Fahrzeugseitenfläche hin ausgerichtet ist, die den Konvexspiegel (6) trägt, zwischen der Lesevorrichtung (4) und dem Konvexspiegel (6) angeordnet ist.

9. Einrichtung nach Anspruch 7, dadurch gekennzeichnet, daß das Prisma durch die Verwendung von zumindest einer konvexen prismatischen Linse in die Lesevorrichtung integriert ist.

10. Einrichtung nach einem der Ansprüche 1 bis 9, dadurch gekennzeichnet, daß der Konvexspiegel (6) ein asphärischer Spiegel ist.

11. Einrichtung nach einem der Ansprüche 1 bis 10, dadurch gekennzeichnet, daß sie im Inneren eines rohrförmigen Gehäuses (46) montiert ist, dessen eines Ende mit kleinem Durchmesser dazu bestimmt ist, an der Seitenfläche eines Fahrzeugs angebracht zu werden, und dessen anderes Ende mit größerem Durchmesser dazu bestimmt ist, in das Armaturenbrett dieses Fahrzeugs integriert zu werden, wobei der Konvexspiegel (6) in dem Gehäuse an der Seite des Endes mit kleinem Durchmesser angebracht wird, und die Lesevorrichtung (4) am anderen Ende, und wobei in der Wand des rohrförmigen Gehäuses (46) in der Höhe des Konvexspiegels (6) eine Öffnung (48) gebildet ist, um die Lichtstrahlen durchzulassen, die an diesem reflektiert werden sollen.
